# DEMANDE DE BREVET EUROPEEN

(11) **EP 4 657 384 A1**
(43) Date de publication de la demande: **03.12.2025**
(21) Numéro de dépôt: 25172745.9
(22) Date de dépôt: 25.04.2025
(51) Int. Cl.: G06V 10/10, G06V 40/40, H04N 23/60, G06F 21/32, H04N 23/661, H04N 23/73, H04N 23/76, H04N 23/81

(54) **PROCÉDÉ ET DISPOSITIF DE DÉTECTION DE FRAUDE À L'IDENTIFICATION D'UNE PERSONNE**

(30) Priorité: 30.05.2024 FR 2405643
(71) Demandeur: Idemia Public Security France, 92400 Courbevoie (FR)
(72) Inventeur: BEAUDET, Jean, 92400 COURBEVOIE (FR)
(74) Mandataire: IPS

(57) **Abrégé**

Le procédé (60) de détection de fraude à l'identification d'une personne par reconnaissance de caractéristiques biométriques visibles, comporte :
- une étape (61) de commande d'une valeur de gain d'amplification du signal sortant d'un capteur d'image (46),
- une étape (64) de mesure du bruit d'acquisition d'au moins une image d'au moins une partie du corps de cette personne, image captée en mettant en œuvre ledit gain d'amplification,
- une étape (70) de vérification de cohérence, par comparaison, entre le bruit mesuré et le bruit déterminé, et
- en cas de défaut de cohérence, une étape (71) d'émission d'un signal représentatif de ce défaut de cohérence.

## Description

### DOMAINE DE L'INVENTION

La présente invention concerne un procédé et un dispositif de détection de fraude à l'identification d'une personne. Elle s'applique, en particulier, à l'identification d'une personne physique à distance pour lui donner accès à une ressource de la toile (en anglais « web ») par vérification de cohérences de données associées à un flux vidéo.

### ART ANTÉRIEUR

L'identification d'une personne est généralement réalisée sur la base de ce qu'il sait, par exemple un mot de passe, de ce qu'il détient, par exemple une clé, ou de ce qu'il est, par exemple par vérification d'une donnée biométrique telle qu'une empreinte digitale, sa voix ou son visage.

Dans le cas d'une identification, notamment à distance, d'une personne physique, par exemple pour lui donner accès à des données ou des comptes personnels, chaque type d'identification peut faire l'objet de tentatives de fraudes.

La reconnaissance d'un visage à distance, par le biais d'une caméra d'un téléphone mobile ou d'un ordinateur et de la transmission du flux vidéo, est une voie prometteuse pour l'identification d'une personne, car elle permet une interaction dynamique entre le destinataire du flux vidéo et la personne à identifier.

Le document FR201259962 publié sous le numéro FR2997211, décrit un procédé d'authentification d'une capture d'image d'un visage qui comporte l'analyse d'une série d'images du visage selon des angles de prise de vue différents et la détermination de cohérence géométrique entre des images de la série d'images. Ce procédé présente l'inconvénient que l'utilisateur est obligé de réaliser un mouvement relatif du capteur d'image et du visage de l'utilisateur, ce qui nécessite des manipulations. De plus, du fait que l'environnement de l'utilisateur peut comporter des zones réfléchissantes ou éblouissantes, le visage de l'utilisateur peut être entaché de changement de sensibilité automatique du capteur, voire d'artefacts d'éblouissement du capteur ou de double réflexion dans l'objectif de ce capteur.

Le document US 9 049 379 décrit un procédé d'identification dans lequel on pilote la longueur focale de l'objectif du capteur d'image pour analyser l'effet de ce changement de la distance de mise au point sur l'image captée. Ce procédé a l'inconvénient de nécessiter que l'objectif dispose d'une longueur focale motorisée, ce qui n'est généralement pas le cas des caméras frontales de téléphones mobiles ou d'ordinateur.

Un type de fraude à l'identification consiste à mémoriser un flux vidéo obtenu au cours d'une identification de la personne accédant à un site de la toile puis à retransmettre ce flux vidéo lors d'une nouvelle tentative d'accès à ce site.

Un autre type de fraude à l'identification consiste à utiliser une caméra virtuelle qui produit un flux vidéo par synthèse d'images basée sur des images réelles de la victime de la fraude.

Ces deux types de fraudes s'appliquent aussi bien à un flux vidéo représentatif du visage de la personne à identifier qu'à une autre image de données biométrique, par exemple une empreinte digitale, un réseau de faisceaux sanguins (reconnaissance veineuse), ou une image de la paume de la main (reconnaissance de texture) ou de sa forme (morphologie biométrique), par exemple.

Les méthodes connues n'assurent pas une bonne protection contre les formes les plus évoluées de ces deux types de tentatives de fraude.

### RÉSUMÉ DE L'INVENTION

La présente invention vise à remédier à tout ou partie des inconvénients de l'art antérieur.

À cet effet, selon un premier aspect, la présente invention vise un procédé de détection de fraude à l'identification d'une personne par reconnaissance de caractéristiques biométriques visibles, qui comporte :
- une étape de commande d'une valeur de gain d'amplification du signal sortant d'un capteur d'image,
- une étape de mesure du bruit d'acquisition d'au moins une image d'au moins une partie du corps de cette personne captée en mettant en œuvre ledit gain d'amplification,
- une étape de vérification de cohérence entre le bruit mesuré et la valeur de gain commandée, et
- en cas de défaut de cohérence, une étape d'émission d'un signal représentatif de ce défaut de cohérence.

Grâce à ces dispositions, on détecte une tentative de fraude consistant à mettre en œuvre une caméra virtuelle qui produit un flux vidéo par synthèse d'images basée sur des images réelles de la victime de la fraude. En effet, la synthèse d'image ne comporte généralement pas un bruit correspondant au gain appliqué pour obtenir le flux vidéo.

Ainsi, on pilote au moins une valeur de paramètre de capture d'image et on vérifie que le bruit mesuré est cohérent avec cette valeur. On détecte ainsi une fraude consistant à rejouer une séquence vidéo obtenue lors d'une précédente identification de personne victime de la tentative de fraude.

Dans des modes de réalisation, au cours de l'étape de commande d'une valeur de gain d'amplification, on commande une durée d'exposition du capteur d'image. Ainsi, l'étape de commande d'une valeur de gain d'amplification est mise en œuvre par un asservissement en consigne de durée d'exposition. En effet, la commande de la durée d'exposition fait varier le gain appliqué au signal sortant du capteur d'image, indirectement à cause de l'asservissement automatique des niveaux de l'image et, éventuellement, avec un retard qui peut être mesuré et participer à la détection d'une fraude.

Dans des modes de réalisation, au cours de l'étape de commande, on fait varier simultanément la valeur du gain d'amplification du signal sortant du capteur d'image et la valeur de la durée d'exposition du capteur d'image, de manières opposées. Ainsi, pour la personne à identifier, les variations de luminosité de l'image se compensent, au moins partiellement, une augmentation de gain étant compensée par une réduction de la durée d'exposition, et inversement.

Dans des modes de réalisation, le procédé objet de l'invention comporte, de plus :
- une étape de détermination de métadonnées représentatives de conditions de capture d'au moins une image sur laquelle la mesure de bruit est effectuée, lesdites métadonnées étant reçues avec des données représentatives de cette image,
- une étape de détermination d'un bruit d'acquisition lors de la capture d'image, correspondant aux métadonnées déterminées ou de métadonnées correspondant au bruit mesuré et,
- au cours de l'étape de vérification de cohérence, on compare le bruit mesuré et le bruit déterminé ou les métadonnées correspondant au bruit mesuré et les métadonnées déterminées.

En effet, la valeur de gain correspondant aux images (ou de façon équivalente la sensibilité ISO) peut être obtenue de différentes façons, soit par réception de la consigne d'asservissement du gain (notamment la commande de gain), soit par lecture de métadonnées reçues avec les données représentatives de cette image (par exemple dans un fichier de métadonnées), ou par interrogation d'une interface logicielle (par exemple API de la caméra).Ainsi, on tient compte dans ce mode de mise en œuvre des métadonnées associées au flux vidéo.

Dans des modes de réalisation, au cours de l'étape de vérification de cohérence, on compare le bruit mesuré et le bruit déterminé sur une séquence d'images faisant suite à une variation de la valeur du gain d'amplification du signal sortant du capteur d'image.

On peut ainsi mesurer le bruit soit sur une seule image soit par comparaison d'images successives, pour s'affranchir du bruit correspondant à la tolérance de fabrication sur la réponse des différents photosites, ou pixels, du capteur d'image. Une implémentation des plus légères étant :
- une étape d'acquisition d'une valeur de gain d'amplification du signal sortant du capteur d'image,
- une étape de mesure du bruit d'acquisition d'au moins une image d'au moins une partie du corps de cette personne captée en mettant en œuvre ledit gain d'amplification,
- une étape de commande d'une autre valeur de gain d'amplification du signal sortant du capteur d'image ;
- une étape de mesure du bruit d'acquisition d'au moins une image d'au moins une partie du corps de cette personne captée en mettant en œuvre ledit autre gain d'amplification,
- une étape de vérification de cohérence entre les valeurs de bruit mesurées et les valeurs de gain correspondantes auxdites au moins une image.

Cette implémentation légère permet d'appliquer deux valeurs de gain tout en n'en commandant qu'une seule, et d'obtenir deux mesures de bruit.

Dans des modes de réalisation, au cours de l'étape de vérification de cohérence, on vérifie la cohérence de la durée d'ajustement de la valeur du gain d'amplification du signal sortant du capteur d'image après la fin d'émission d'une commande.

On peut ainsi mesurer les effets de la commande transmise sur un retour aux valeurs de paramètres de capture d'image lorsque l'on arrête la transmission de la commande. En effet, par construction, une caméra comportant le capteur d'image suit un algorithme d'optimisation conjoint des paramètres de capture d'image, notamment pour réduire le bruit dans le signal représentatif d'image, qui réalise progressivement cette optimisation sur une pluralité d'images successivement captées.

Dans des modes de réalisation, le procédé objet de l'invention comporte une pluralité d'étapes de commande de différentes valeurs de gain d'amplification du signal sortant d'un capteur d'image, et une pluralité d'étapes de mesure du bruit d'acquisition d'images captées en mettant en œuvre lesdits gains d'amplification, et, au cours de l'étape de vérification de cohérence, on vérifie que le bruit mesuré évolue de manière conjointe aux valeurs de gain.

Ainsi, ce sont les variations relatives du bruit et du gain qui sont mises en œuvre pour vérifier la cohérence entre les images reçues et les commandes de gain appliquées à ces images. On évite ainsi d'avoir à connaître le modèle de capteur d'image et de circuit électronique de commande (formant ensemble une caméra) pour vérifier la cohérence.

Avantageusement, au cours de l'étape de vérification de cohérence, on évalue une variation du gain d'amplification dans une fenêtre temporelle déterminée couvrant tout ou partie de la pluralité d'étapes de commande de différentes valeurs de gain d'amplification, puis on détermine une variation du bruit mesuré dans ladite fenêtre temporelle et on vérifie que les variations du gain et du bruit sont de même signe. En variante avantageuse, au cours de l'étape de vérification de cohérence, on évalue un vecteur de valeurs de gain d'amplification dans une fenêtre temporelle déterminée couvrant tout ou partie de la pluralité d'étapes de commande de différentes valeurs de gain d'amplification, puis on détermine un vecteur de valeurs de bruit mesuré dans ladite fenêtre temporelle et on vérifie que le vecteur de valeurs de bruit mesuré est corrélé au vecteur de valeurs de gain d'amplification.

Dans des modes de réalisation, au cours de l'étape de vérification de cohérence, on évalue une pente d'une fonction linéaire approximant la relation entre le gain et le rapport signal sur bruit, puis on détermine si cette pente est dans un intervalle de valeurs prédéterminé.

En effet, cette pente est sensiblement constante entre les différentes caméras équipant les terminaux utilisateur, tels que les smartphones, les webcams (caméras de la toile) et les ordinateurs.

Dans des modes de réalisation, le procédé de détection de fraude comporte, de plus :
- une étape de mesure du flou de bougé dans au moins une image d'au moins une partie du corps de cette personne, image captée en mettant en œuvre ladite durée d'exposition du capteur d'image,
- une étape de détermination d'un flou de bougé lors de la capture d'image, correspondant à la commande de durée d'exposition,
- une étape de vérification de cohérence, par comparaison, entre le flou de bougé mesuré et le flou de bougé déterminé, et
- en cas de défaut de cohérence, une étape d'émission d'un signal représentatif de cette incohérence.

Grâce à ces dispositions, on détecte au moins une tentative de fraude consistant à mettre en œuvre une caméra virtuelle qui produit un flux vidéo par synthèse d'images basée sur des images réelles de la victime de la fraude. En effet, la synthèse d'image ne comporte généralement pas un flou de bougé correspondant aux métadonnées associées au flux vidéo.

Selon un deuxième aspect, la présente invention vise un dispositif de détection de fraude à l'identification d'une personne par reconnaissance de caractéristiques biométriques visibles, qui comporte :
- un capteur d'image,
- un moyen de commande d'une valeur de gain d'amplification du signal sortant du capteur d'image,
- un moyen d'acquisition de la valeur de gain appliquée pour chaque image captée,
- un moyen de mesure des bruits d'acquisition d'au moins deux images d'au moins une partie du corps de cette personne captées en mettant en œuvre au moins deux gains d'amplification différents,
- un moyen de vérification de cohérence entre les valeurs de gain acquises correspondant auxdites images et les valeurs de bruit mesurées, et
- un moyen d'émission d'une alerte de fraude à l'identification configuré pour, en cas de défaut de cohérence, émettre un signal représentatif de ce défaut de cohérence. Les avantages, buts et caractéristiques particulières de ce dispositif étant similaires à ceux du procédé objet de l'invention, ils ne sont pas rappelés ici.

### BRÈVE DESCRIPTION DES FIGURES

D'autres avantages, buts et caractéristiques de la présente invention ressortiront de la description qui va suivre, donnée dans un but explicatif et nullement limitatif en regard des dessins annexés, dans lesquels :
[Fig. 1] représente un premier mode de réalisation particulier d'un dispositif objet de la présente invention,
[Fig. 2 représente, sous forme d'un logigramme, des étapes du premier mode de réalisation particulier du procédé objet de l'invention,
[Fig. 3] représente des courbes de variation de gain et de mesure de bruit sur un visage, sur une séquence d'images,
[Fig 4] représente un deuxième mode de réalisation particulier d'un dispositif objet de l'invention,
[Fig. 5] représente deux abaques de correspondance entre sensibilité ISO et rapport signal sur bruit, et
[Fig. 6] représente, sous forme d'un logigramme, des étapes d'un deuxième mode de réalisation particulier du procédé objet de l'invention.

### DESCRIPTION DE MODES DE RÉALISATION

On note, dès à présent, que les figures ne sont pas à l'échelle.

### Premier mode de réalisation du dispositif objet de l'invention

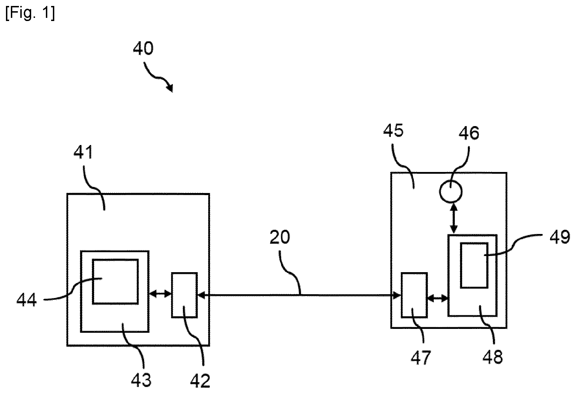

On observe, en figure 1, un dispositif 40 objet de l'invention comportant un serveur 41 d'identification. Ce serveur 41 est muni d'un moyen 42 de réception d'image et d'émission de commandes de valeurs de paramètres de capture d'image. Le serveur 41 comporte aussi une mémoire 43 conservant des données d'image reçues, des métadonnées reçues, des valeurs de bruit mesurées et un logiciel 44 d'identification mettant en œuvre le premier mode de réalisation du procédé objet de l'invention. Le serveur 41 est de type connu dans les réseaux informatiques.

Les métadonnées sont une partie importante de tout fichier représentatif d'images, y compris les vidéos. Certains types de métadonnées fournissent des informations sur la prise de vue. Par exemple, les données EXIF (acronyme de Exchangeable Image File Format pour format de fichier d'image échangeable) constituent un type de métadonnées qui fournit des informations sur la prise de vue. Plus précisément, les données EXIF fournissent des informations sur les paramètres de l'appareil photo utilisés pour capturer la vidéo, tels que l'ouverture de l'objectif, la vitesse d'obturation (ou durée d'exposition) et la sensibilité ISO. Les métadonnées d'une vidéo se trouvent généralement dans les propriétés du fichier ou dans un fichier distinct.

Le dispositif 40 comporte aussi un terminal utilisateur 45 muni d'un capteur d'image 46 et d'un moyen 47 de transmission d'image à distance et de réception de commandes de valeurs de paramètres de capture d'image par le capteur d'image 46. Le terminal utilisateur 45 comporte aussi une mémoire 48 conservant un logiciel 49 de commande de fonctionnement du capteur d'image 46 et du moyen 47. Le terminal utilisateur 45 est, par exemple, un ordinateur ou un téléphone, notamment un smartphone (ou « ordiphone »). Les valeurs de paramètre comportent préférentiellement la durée d'exposition du capteur d'image 46 et/ou le gain d'amplification du signal sortant du capteur d'image 46. Par exemple, le logiciel 49 est un logiciel de navigation, un logiciel de visioconférence ou une application informatique.

Un réseau 20 assure la transmission de données entre le moyen 47 de transmission d'image et de réception de commandes et le moyen 42 de réception d'image et d'émission de commandes.

### Premier mode de réalisation du procédé objet de l'invention

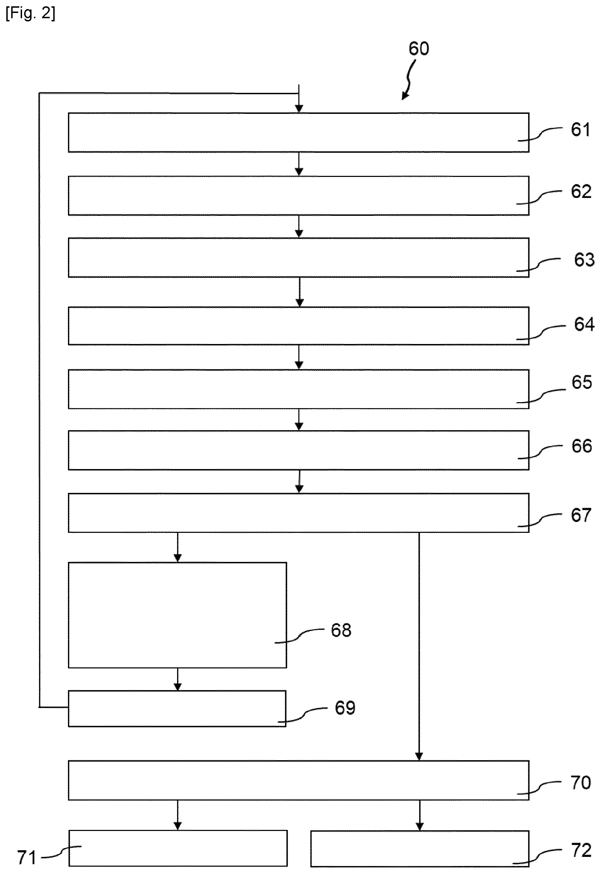

Conjointement avec le terminal utilisateur 45, le logiciel 44 met en œuvre le procédé 60 illustré en figure 2. Ce procédé 60 effectue une détection de fraude à l'identification d'une personne, cette identification se faisant par reconnaissance de caractéristiques biométriques visibles, notamment un visage, une empreinte digitale, un réseau de vaisseaux sanguins ou une image de la paume de la main ou de sa forme.

Dans ce procédé 60, on implémente un mécanisme « challenge-response », chaque challenge étant une commande de gain (correspondant à une sensibilité ISO) et la réponse étant une mesure du bruit dans les images reçues). Dans le mode de réalisation préféré illustré en figure 2, le « challenge » est une séquence aléatoire de commandes de niveaux de gain, de préférence une fonction constante par morceaux, c'est-à-dire par paliers successifs. La « réponse » est obtenue par l'intermédiaire de l'estimation du SNR (signal to noise ratio, ou rapport signal sur bruit).

Une implémentation particulièrement légère de ce mécanisme, implémentation qui a l'avantage de ne pas nécessiter de connaissance sur le capteur d'image ou la caméra mise en œuvre, consiste en :
- une étape d'acquisition d'une valeur de gain d'amplification du signal sortant du capteur d'image,
- une étape de mesure du bruit d'acquisition d'au moins une image d'au moins une partie du corps de cette personne captée en mettant en œuvre ledit gain d'amplification,
- une étape de commande d'une autre valeur de gain d'amplification du signal sortant du capteur d'image ;
- une étape de mesure du bruit d'acquisition d'au moins une image d'au moins une partie du corps de cette personne captée en mettant en œuvre ledit autre gain d'amplification,
- une étape de vérification de cohérence entre les valeurs de bruit mesurées et les valeurs de gain correspondantes auxdites au moins une image.

Cette implémentation permet d'appliquer deux valeurs de gain tout en n'en commandant qu'une seule, et d'obtenir deux mesures de bruit. La vérification de cohérence peut se limiter à la vérification que les variations du gain et du bruit sont de même signe, ou être plus complexe comme décrit plus bas.

Dans la figure 2, ce procédé 60 comporte une étape 61 de commande d'un gain appliqué au signal sortant du capteur d'image 46. En variante, on commande la durée d'exposition du capteur d'image 46 car un contrôleur automatique de gain de la caméra ajuste ensuite le gain appliqué au signal sortant du capteur d'image en fonction du niveau moyen de ce signal, lui-même influencé par la durée d'exposition au cours de la capture d'une image.

De préférence, comme illustré en figures 1 et 2, on pilote la caméra à distance, en faisant évoluer la valeur de la sensibilité ISO, par commande directe du gain d'amplification ou on pilote la durée d'exposition du capteur d'image 46.

On note ici que les utilitaires pour configurer la luminosité, le contraste, la balance des blancs, etc., d'un flux vidéo sont connus, par exemple l'utilitaire FFmpeg ^{®}. De même, Windows 11 ^{®} permet de commander la luminosité, le contraste, la saturation et/ou la netteté des images. Enfin, les « propriétés » d'une caméra peuvent être éditées sur de nombreux systèmes d'exploitation.

Préférentiellement, les changements de gain sont faits de façon la plus discrète possible pour la personne à identifier (l'utilisateur du terminal 45), en faisant en sorte qu'ils soient compensés par des changements de durée d'exposition. Ainsi, préférentiellement, au cours de l'étape 61 de commande, on fait varier simultanément la valeur du gain d'amplification du signal sortant du capteur d'image et la valeur de la durée d'exposition du capteur d'image, de manières opposées. Plusieurs façons de le faire sont possibles :
- explicitement : si le gain est multiplié par *α,* on divise la durée d'exposition par *α,*
- par asservissement : on active un contrôle automatique de la durée d'exposition, ou
- indirectement : on active un contrôle automatique du gain, et c'est la durée d'exposition qu'on fait varier au lieu du gain.

Les changements/asservissements peuvent ne pas être immédiats. On peut prendre ceci en compte en calculant un décalage temporel entre le challenge et la réponse. Par exemple, par une zncc ou en utilisant une information a priori sur la durée de réponse du capteur d'image et de son électronique associée.

On peut aussi prendre en compte une incertitude sur la durée de réponse, et ignorer les estimations de bruit pendant une durée « temps_réponse_max » après chaque transition. On peut aussi rendre les changements plus discrets en normalisant la luminosité moyenne de l'image avant son affichage (optionnel) à la personne à identifier.

Le procédé 60 comporte ensuite une étape 62 de capture d'au moins une image d'au moins une partie du corps de la personne à identifier, par le capteur d'image 46, en mettant en œuvre chaque valeur de paramètre commandée par le logiciel 44.

Au cours d'une étape 63, le terminal utilisateur 45 effectue la transmission d'au moins une image captée au serveur 41, par l'intermédiaire du moyen 47 de transmission d'image et du moyen 42 de réception d'image.

Au cours d'une étape 64, le logiciel 44 effectue une mesure et une mémorisation du bruit d'acquisition d'au moins une image reçue. La mesure du niveau de bruit est effectuée, soit à partir d'une seule image, selon une méthode connue, soit à partir de plusieurs images successives (par comparaison entre elles, pixel par pixel, selon une méthode connue). Pour l'estimation de bruit dans une seule image, le lecteur pourra se référer à la publication Chen, G., Zhu, F., & Ann Heng, P. (2015). « An efficient statistical method for image noise level estimation ». In Proceedings of the IEEE International Conference on Computer Vision (pp. 477-485). Pour l'estimation de bruit sur plusieurs images successivement captées, on peut, d'abord, effectuer un recalage spatial, puis mesurer la différence de valeur de signal pour chaque photosite du capteur d'image dans la zone d'image recalée. On peut ainsi calculer le bruit par une estimation d'écart type.

On peut acquérir le gain correspondant aux images (ou, de façon équivalente, la sensibilité ISO) soit selon une commande de gain émise, soit en interrogeant une interface logicielle (« API » pour Application Programming Interface, pour interface de programmation d'application) d'une caméra, soit en le lisant dans un fichier de métadonnées associées à l'image, comme dans l'étape 65 décrite ci-dessous. Au cours de cette étape optionnelle 65, le logiciel 44 réalise une détermination de métadonnées représentatives de conditions de capture d'au moins une image sur laquelle la mesure de bruit est effectuée. Ces métadonnées représentent une durée d'exposition du capteur d'image 46 et/ou un gain d'amplification du signal sortant du capteur d'image 46. Dans une première variante, des métadonnées sont reçues avec les données représentatives d'au moins une image. Dans une deuxième variante, des métadonnées sont déterminées en fonction de la commande transmise au cours de l'étape 61 de commande, c'est-à-dire des valeurs de paramètres transmises au terminal utilisateur 45 au cours de l'étape 61.

Au cours d'une étape optionnelle 66, le logiciel 44 détermine et mémorise un bruit d'acquisition lors de la capture d'image, qui correspond aux métadonnées déterminées, comme décrit plus bas. Dans le cas où la métadonnée déterminée au cours de l'étape 65 comporte la sensibilité ISO (correspondant au gain), et préférentiellement le modèle de capteur d'image 46 et/ou de caméra mise en œuvre par le terminal utilisateur 45, on détermine, au cours de l'étape 66, le niveau de bruit typique correspondant à la valeur de la sensibilité. On note que, selon le fabricant de la caméra, le gain appliqué au signal sortant du capteur d'image peut varier. En variante, au cours de l'étape 66, on détermine des métadonnées qui peuvent correspondre au bruit mesuré.

Au cours d'une étape 67, le logiciel 44 détermine si un nombre prédéterminé de commandes de variations de valeurs de gain a été atteint. Par exemple, ce nombre est de cinq itérations. Si ce nombre n'a pas été atteint, le logiciel 44 détermine, préférentiellement de manière aléatoire ou pseudoaléatoire, une nouvelle valeur de gain et, éventuellement, une durée d'attente, au cours d'une étape 68. Une fois cette durée d'attente écoulée, au cours d'une étape 69, le logiciel 44 retourne la valeur de gain à l'étape 61, qui est réitérée ainsi que les étapes 62 à 67.

La séquence de successions d'étapes 61 à 67 dure typiquement quelques secondes, par exemple dix. Si le challenge est par paliers, un palier dure typiquement deux à trois secondes. La durée d'un palier elle-même peut être aléatoire, comme exposé en regard de l'étape 68.

Si le résultat de l'étape 67 est positif, au cours d'une étape 70, le logiciel 44 vérifie la cohérence entre le bruit mesuré et mémorisé, d'une part, et les commandes de gain appliquées au capteur d'image 46, d'autre part.

Avantageusement, au cours de cette étape 70 de vérification de cohérence, on évalue une variation du gain d'amplification dans une fenêtre temporelle déterminée couvrant tout ou partie de la pluralité d'étapes 61 de commande de différentes valeurs de gain d'amplification, puis on détermine une variation du bruit mesuré dans ladite fenêtre temporelle et on vérifie que les variations du gain et du bruit sont de même signe.

En variante avantageuse, au cours de l'étape 70 de vérification de cohérence, on évalue un vecteur de valeurs de gain d'amplification dans une fenêtre temporelle déterminée couvrant tout ou partie de la pluralité d'étapes 61 de commande de différentes valeurs de gain d'amplification, puis on détermine un vecteur de valeurs de bruit mesuré dans ladite fenêtre temporelle et on vérifie que le vecteur de valeurs de bruit mesuré est positivement corrélé au vecteur de valeurs de gain d'amplification.

Vérification de cohérence entre mesures de bruit et commandes de gain Une première méthode consiste, si les étapes optionnelles 65 et 66 ont été réalisées, la vérification de cohérence est réalisée entre le bruit mesuré et mémorisé, d'une part, et les métadonnées reçues et mémorisées, d'autre part. À cet effet, on effectue une comparaison des valeurs de bruit mesuré et de bruit correspondant aux métadonnées reçues ou une comparaison de métadonnées correspondant au bruit mesuré et de métadonnées reçues. Si plus d'une itération des étapes 61 à 67 ont été réalisées, préférentiellement, au cours de l'étape 70 de vérification de cohérence, on compare le bruit mesuré et le bruit déterminé sur une séquence d'images faisant suite à une variation de la valeur du gain d'amplification du signal sortant du capteur d'image et/ou de la valeur de la durée d'exposition du capteur d'image.

Le rapport signal sur bruit (« SNR » pour Signal to Noise Ratio) est une valeur mesurée. Les métadonnées d'intérêt sont une valeur de gain correspondant à une sensibilité ISO (acronyme de International Organization for Standardization, ou Organisation internationale de normalisation) et/ou une valeur de durée d'exposition. Pour vérifier la cohérence entre ces valeurs, on peut utiliser différents algorithmes :
- à partir de la mesure du rapport signal sur bruit, on estime le gain (ou sensibilité ISO) et/ou la durée d'exposition ; puis on compare ces métadonnées estimées et les métadonnées connues (à partir des commandes de fonctionnement du capteur ou des métadonnées associées au flux d'images analysé) ;
- à partir des métadonnées connues, on estime le rapport signal sur bruit attendu, puis on compare le rapport signal sur bruit mesuré et le rapport signal sur bruit attendu ;

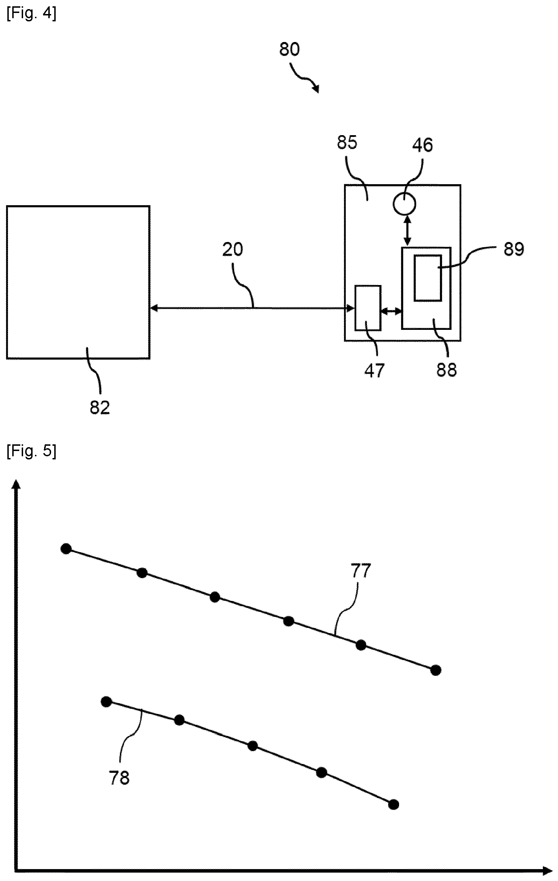

La conversion entre ce qui est reçu ou mesuré et ce qui est estimé ou attendu repose typiquement sur des abaques dépendants du modèle de caméra mis en œuvre par le terminal utilisateur. Un exemple de tels abaques 77 et 78 est représenté en figure 5. Dans cet exemple, la sensibilité ISO mesurée est représentée en abscisses et le rapport signal sur bruit est en ordonnées.

Dans une deuxième méthode, plutôt que de rechercher un abaque correspondant au capteur d'images, on utilise la comparaison de la variation du rapport signal sur bruit mesuré et de la variation de la sensibilité ISO commandée. Par exemple, on vérifie que le rapport signal sur bruit évolue dans le sens inverse de la sensibilité ISO : quand on fait varier le niveau ISO de manière significative, par exemple en le multipliant par deux, on doit observer une baisse significative du rapport signal sur bruit (c'est-à-dire une augmentation du bruit avec le gain appliqué au signal sortant du capteur). On peut donc appliquer une pluralité de valeurs de sensibilités ISO sur autant d'intervalles de temps, mesurer le rapport signal sur bruit moyen sur chaque intervalle, et vérifier qu'à chaque changement de valeur de sensibilité ISO correspond une variation du rapport signal sur bruit dans le sens inverse.

Dans une variante préférentielle, on vérifie la relation attendue entre le rapport signal sur bruit et la sensibilité ISO. En effet, cette relation est généralement de type snr_dB = a * log (ISO) + b, formule dans laquelle « snr_dB » est le rapport signal sur bruit, en décibels, « ISO », la sensibilité ISO, « b » une constante et a, une constante multiplicative, ou pente, environ égale à -10. On peut, par exemple, effectuer une régression linéaire pour obtenir les valeurs des constantes a et b, et considérer que la cohérence est correcte si la valeur de la pente a est plus proche de -10 que de 0. Plus généralement, on détermine si cette pente a est dans une intervalle de valeurs prédéterminé. Par exemple, cet intervalle va de moins l'infini à -5 ou entre -20 et -5.

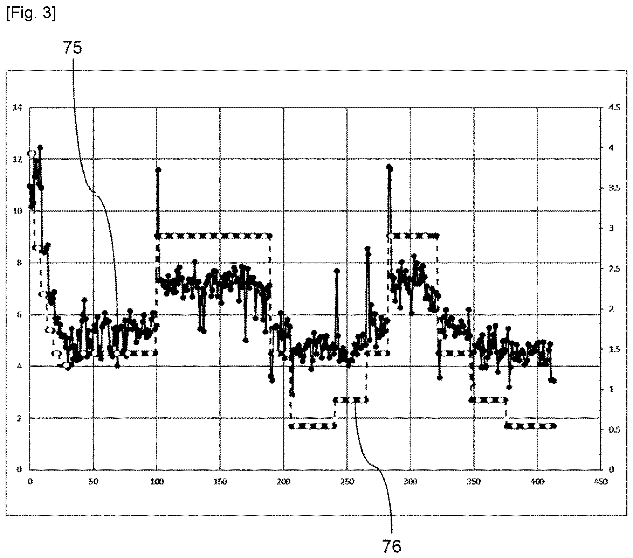

Comme représenté en figure 3, la relation entre le gain et le bruit n'est pas tout à fait linéaire. Dans la figure 3, la courbe 75 représente une succession de bruits mesurés et la courbe 76 représente les valeurs de gain. Dans des variantes, on prend en compte cette non-linéarité, par exemple en appliquant au challenge une fonction de correspondance typique d'une caméra (ou pré-calibrée) avant vérification de cohérence avec la réponse reçue.

Typiquement on détermine l'intervalle des variations de gain (ou de durée d'exposition) du challenge en réalisant le début de la séquence en mode automatique, et en relevant la durée d'exposition et le gain après convergence (typiquement, une seconde).

Alternativement à la mesure de la pente de la fonction reliant le rapport signal sur bruit (en décibels) à la sensibilité ISO, on compte le nombre de transitions cohérentes entre le challenge et la réponse :
- le gain d'amplification du signal sortant du capteur d'image évolue par paliers, de manière croissante ou décroissante,
- pour chaque intervalle de temps correspondant à un palier, on calcule la moyenne du SNR,
- pour chaque transition, on note cette moyenne est constante (c'est-à-dire varie, par rapport au palier précédent moins qu'une valeur prédéterminée, par exemple 10 %, croissante, ou décroissante (constant : variation < seuil_transition)
- on compte le nombre ou la proportion de transitions dont l'évolution ne correspond pas à l'évolution du gain d'amplification, et
- si ce nombre ou cette proportion est supérieur à une valeur limite prédéterminée, on conclut qu'il s'agit d'une tentative de fraude.

En variante, ou complémentairement, au cours de l'étape 70, on vérifie la cohérence de la durée d'ajustement de la valeur du gain d'amplification du signal sortant du capteur d'image et/ou de la valeur de la durée d'exposition du capteur d'image après la fin d'émission d'une commande.

En cas de défaut de cohérence, au cours d'une étape 71, le logiciel 44 émet un signal représentatif de ce défaut de cohérence pour bloquer la suite du processus d'identification de la personne et, ainsi, interdire son identification.

En cas de confirmation de cohérence, au cours d'une étape 72, le logiciel 44 autorise la poursuite du processus d'identification de la personne par un logiciel d'identification par comparaison (en anglais « matching ») de caractéristiques biométriques visibles. Ce logiciel d'identification est de type connu.

### Deuxième mode de réalisation du dispositif objet de l'invention

Dans le deuxième mode de réalisation du dispositif objet de l'invention, les moyens techniques sont intégrés dans le terminal utilisateur. On observe, en figure 4, un dispositif 80 objet de l'invention comportant un terminal utilisateur 85 muni d'un capteur d'image 46 et d'un moyen 47 de transmission de messages à distance et de réception de commandes de fonctionnement. Le terminal utilisateur 85 comporte aussi une mémoire 88 conservant un logiciel 89 de commande de fonctionnement du capteur d'image 46 et du moyen de transmission 47. Par exemple, le logiciel 89 commande le fonctionnement d'un logiciel de navigation, un logiciel de visioconférence ou une application informatique. La mémoire 88 conserve aussi des données d'image captées, des métadonnées des images captées, des valeurs de bruit mesurées.

Un réseau 20 assure la transmission de données entre le moyen 47 de transmission d'image et de réception de commandes et un moyen 82 d'identification d'un utilisateur par reconnaissance de caractéristiques biométriques, de type connu. Dans le procédé 60 illustré en figure 2, le logiciel 89 effectue les étapes du logiciel 44. Ce procédé 60 effectue ainsi une détection de fraude à l'identification d'une personne directement dans le terminal utilisateur 85. Le message émis par le logiciel 89 au cours de l'une des étapes 71 ou 72 est transmis par le moyen de transmission 47 au moyen d'identification 82, pour autoriser, ou non, la poursuite du processus d'identification de la personne utilisant le terminal 85.

Comme on le comprend à la lecture de la description qui précède, chacun des dispositifs 40 ou 80 de détection de fraude à l'identification d'une personne par reconnaissance de caractéristiques biométriques visibles, comporte :
- un capteur d'image 46,
- un moyen, 42 ou 89, de commande d'une valeur de gain d'amplification du signal sortant du capteur d'image,
- un moyen d'acquisition de la valeur de gain appliquée pour chaque image captée,
- un moyen, 43 et 44, ou 89, de mesure des bruits d'acquisition d'au moins deux images d'au moins une partie du corps de cette personne, images captées en mettant en œuvre au moins deux gains d'amplification différents,
- un moyen, 43 et 44, ou 89, de vérification de cohérence entre les valeurs de gain acquises correspondant auxdites images et les valeurs de bruit mesurées, et
- un moyen, 43, 44 et 47, ou 89, d'émission d'une alerte de fraude à l'identification configuré pour, en cas de défaut de cohérence, émettre un signal représentatif de ce défaut de cohérence.

On donne, ci-dessous, des informations techniques complémentaires pour au moins un mode de réalisation du dispositif et du procédé objets de l'invention.

### Deuxième mode de réalisation du procédé objet de l'invention

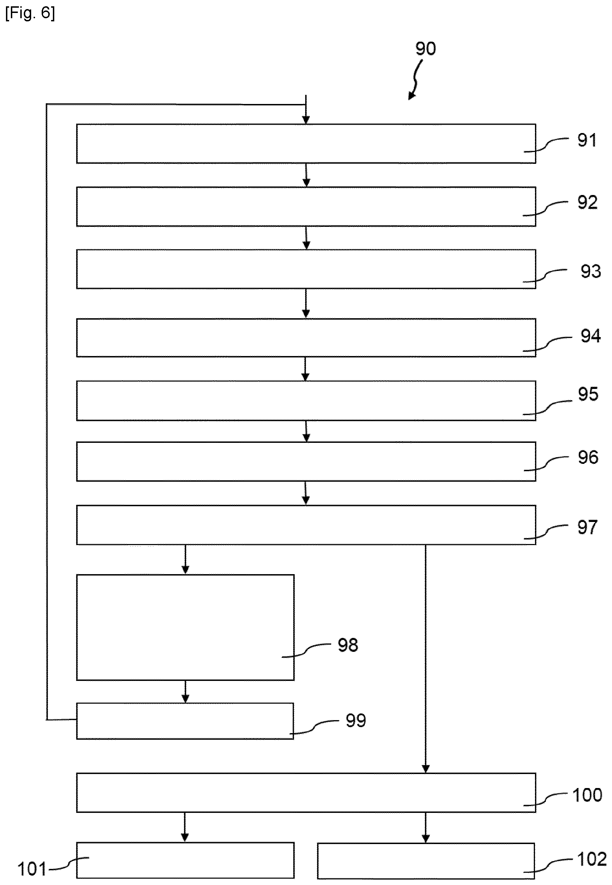

Dans le deuxième mode de réalisation du procédé objet de l'invention, on vérifie la cohérence entre un flou de bougé mesuré et la durée d'exposition du capteur d'image lors d'au moins une capture d'image. Les dispositifs 40 et 80 illustrés en figures 1 et 4 permettent la mise en œuvre de ce procédé. Conjointement avec le terminal utilisateur 45 ou 85, le logiciel, 44 ou 89, met en œuvre le procédé 90 illustré en figure 6. Ce procédé 90 complète le procédé 60 ou se substitue à lui. Ce procédé 90 effectue une détection de fraude à l'identification d'une personne, cette identification se faisant par reconnaissance de caractéristiques biométriques visibles, notamment un visage, une empreinte digitale, un réseau de vaisseaux sanguins ou une image de la paume de la main ou de sa forme.

Ce procédé 90 comporte une étape 91 de commande d'un paramètre de capture d'image du capteur d'image 46. Par exemple, ce paramètre comporte la durée d'exposition du capteur d'image 46 et/ou un gain d'amplification du signal sortant du capteur d'image 46.

Le procédé 90 comporte ensuite une étape 92 de capture d'au moins une image d'au moins une partie du corps de la personne à identifier, par le capteur d'image 46, en mettant en œuvre chaque valeur de paramètre commandée par le logiciel 44 ou 89. Au cours d'une étape 93, le terminal utilisateur 45 effectue la transmission d'au moins une image captée au serveur 41, par l'intermédiaire du moyen 47 de transmission d'image et du moyen 42 de réception d'image. Dans le cas du terminal utilisateur 85, l'image captée est directement analysée par le logiciel 89, sans transmission d'image à distance.

Au cours d'une étape 94, le logiciel 44 ou 89 effectue une mesure et une mémorisation du flou de bougé lors de l'acquisition d'au moins une image reçue.

Au cours d'une étape 95, le logiciel 44 ou 89 réalise une détermination de métadonnées représentatives de conditions de capture d'au moins une image sur laquelle la mesure de flou de bougé est effectuée. Ces métadonnées représentent une durée d'exposition du capteur d'image 46. Dans une première variante, des métadonnées sont reçues avec les données représentatives d'au moins une image. Dans une deuxième variante, des métadonnées sont les valeurs de paramètres transmises au terminal utilisateur au cours de l'étape 91.

Au cours d'une étape 96, le logiciel 44 ou 89 détermine et mémorise un flou de bougé lors de l'acquisition lors de la capture d'image, qui correspond aux métadonnées déterminées. En variante, au cours de l'étape 96, on détermine des métadonnées qui peuvent correspondre au flou de bougé mesuré.

Au cours d'une étape 97, le logiciel 44 ou 89 détermine si un nombre prédéterminé de variations de valeurs de paramètres de capture d'image par le capteur d'image 46 a été atteint. Par exemple, ce nombre est de dix itérations. Si ce nombre n'a pas été atteint, le logiciel 44 ou 89 détermine, préférentiellement de manière aléatoire ou pseudo-aléatoire, une nouvelle valeur de paramètre et, éventuellement, une durée d'attente, au cours d'une étape 98. Une fois cette durée d'attente écoulée, au cours d'une étape 99, le logiciel 44 ou 89 retourne la valeur de paramètre à l'étape 91, qui est réitérée ainsi que les étapes 92 à 97.

Si le résultat de l'étape 97 est positif, au cours d'une étape 100, le logiciel 44 ou 89 vérifie la cohérence entre le flou de bougé mesuré et mémorisé et les métadonnées reçues et mémorisées, par comparaison des valeurs de flou de bougé mesuré et de flou de bougé correspondant aux métadonnées reçues ou par comparaison de métadonnées correspondant au flou de bougé mesuré et des métadonnées reçues. En cas de défaut de cohérence, au cours d'une étape 101, le logiciel 44 ou 89 émet un signal représentatif de ce défaut de cohérence pour bloquer la poursuite du processus d'identification de la personne.

En cas de confirmation de cohérence, au cours d'une étape 102, le logiciel 44 ou 89 autorise la poursuite de la procédure d'identification de la personne. Généralement, la mesure du flou de bougé nécessite une durée d'exposition longue et des mouvements assez rapides de la personne à identifier.

On note ici que la cohérence du flou de bougé peut être déterminée en comparant les vitesses de déplacement (en pixels /seconde), c'est-à-dire en comparant le flou de bougé divisé par le temps d'exposition et la distance entre la position de la zone d'intérêt entre deux images divisée par l'intervalle de temps entre lesdites deux images, un écart supérieur à un seuil prédéterminé caractérisant un défaut de cohérence.

De manière équivalente, on peut directement comparer les flous de bougés, c'est-à-dire le flou de bougé estimé correspondant à la distance entre des positions respectives dans deux images (« tracking ») multipliée par le temps d'exposition et divisée par l'intervalle de temps entre lesdites deux images et le flou de bougé mesuré notamment obtenu selon une des méthodes citées dans l'article de Tiwari, S., Shukla, V. P., Singh, A. K., & Biradar, S. R. (2013). Review of motion blur estimation techniques. Journal of Image and Graphics, 1(4), 176-184, cette mesure pouvant être effectuée dans une seule image. La vérification de la cohérence se fait par vérification de correspondance entre le flou de bougé estimé par tracking et le flou de bougé mesuré, un écart supérieur à un seuil prédéterminé caractérisant un défaut de cohérence.

Dans ce mode de réalisation, on peut encourager un mouvement de l'utilisateur en lui donnant une instruction de mouvement.

## Revendications

1. Procédé (60) de détection de fraude à l'identification d'une personne par reconnaissance de caractéristiques biométriques visibles, **caractérisé en ce qu'**il comporte :
- une étape (61) de commande d'une valeur de gain d'amplification du signal sortant d'un capteur d'image (46),
- une étape (64) de mesure du bruit d'acquisition d'au moins une image d'au moins une partie du corps de cette personne captée en mettant en œuvre ledit gain d'amplification,
- une étape (70) de vérification de cohérence entre le bruit mesuré et la valeur de gain commandée, et
- en cas de défaut de cohérence, une étape (71) d'émission d'un signal représentatif de ce défaut de cohérence.

2. Procédé (60) de détection de fraude selon la revendication 1, dans laquelle, au cours de l'étape (61) de commande d'une valeur de gain d'amplification, on commande une durée d'exposition du capteur d'image (46).

3. Procédé (60) de détection de fraude selon la revendication 2, dans lequel, au cours de l'étape (61) de commande, on fait varier simultanément la valeur du gain d'amplification du signal sortant du capteur d'image (46) et la valeur de la durée d'exposition du capteur d'image, de manières opposées.

4. Procédé (60) de détection de fraude selon l'une des revendications 1 à 3, qui comporte, de plus :
- une étape (34, 65) de détermination de métadonnées représentatives de conditions de capture d'au moins une image sur laquelle la mesure de bruit est effectuée, lesdites métadonnées étant reçues avec des données représentatives de cette image,
- une étape (35, 66) de détermination d'un bruit d'acquisition lors de la capture d'image, correspondant aux métadonnées déterminées ou de métadonnées correspondant au bruit mesuré et
- au cours de l'étape (70) de vérification de cohérence, on compare le bruit mesuré et le bruit déterminé ou les métadonnées correspondant au bruit mesuré et les métadonnées déterminées.

5. Procédé (60) de détection de fraude selon l'une des revendications 1 à 4, dans lequel, au cours de l'étape (70) de vérification de cohérence, on compare le bruit mesuré et le bruit déterminé sur une séquence d'images faisant suite à une variation de la valeur du gain d'amplification du signal sortant du capteur d'image.

6. Procédé (60) selon la revendication 5, dans lequel, au cours de l'étape (70) de vérification de cohérence, on vérifie la cohérence de la durée d'ajustement de la valeur du gain d'amplification du signal sortant du capteur d'image après la fin d'émission d'une commande.

7. Procédé (60) de détection de fraude selon l'une des revendications 1 à 6, qui comporte une pluralité d'étapes (61) de commande de différentes valeurs de gain d'amplification du signal sortant d'un capteur d'image (46), et une pluralité d'étapes (64) de mesure du bruit d'acquisition d'images captées en mettant en œuvre lesdits gains d'amplification, et, au cours de l'étape (70) de vérification de cohérence, on vérifie que le bruit mesuré évolue de manière conjointe aux valeurs de gain.

8. Procédé (60) de détection de fraude selon la revendication 7, dans lequel, au cours de l'étape (70) de vérification de cohérence, on évalue une pente d'une fonction linéaire approximant la relation entre le gain et le rapport signal sur bruit, puis on détermine si cette pente est dans un intervalle de valeurs prédéterminé.

9. Procédé (60) de détection de fraude selon la revendication 7, dans lequel, au cours de l'étape (70) de vérification de cohérence, on évalue une variation du gain d'amplification dans une fenêtre temporelle déterminée couvrant tout ou partie de la pluralité d'étapes (61) de commande de différentes valeurs de gain d'amplification, puis on détermine une variation du bruit mesuré dans ladite fenêtre temporelle et on vérifie que les variations du gain et du bruit sont de même signe.

10. Procédé (60) de détection de fraude selon la revendication 7, dans lequel, au cours de l'étape (70) de vérification de cohérence, on évalue un vecteur de valeurs de gain d'amplification dans une fenêtre temporelle déterminée couvrant tout ou partie de la pluralité d'étapes (61) de commande de différentes valeurs de gain d'amplification, puis on détermine un vecteur de valeurs de bruit mesuré dans ladite fenêtre temporelle et on vérifie que le vecteur de valeurs de bruit mesuré est corrélé au vecteur de valeurs de gain d'amplification.

11. Procédé (60) de détection de fraude selon l'une des revendications 2 ou 3, ou l'une des revendications 4 à 10 lorsqu'elles dépendent de la revendication 2, qui comporte, de plus :
- une étape (94) de mesure du flou de bougé dans au moins une image d'au moins une partie du corps de cette personne, image captée en mettant en œuvre ladite durée d'exposition du capteur d'image,
- une étape (96) de détermination d'un flou de bougé lors de la capture d'image, correspondant à la commande de durée d'exposition,
- une étape (100) de vérification de cohérence, par comparaison, entre le flou de bougé mesuré et le flou de bougé déterminé, et
- en cas de défaut de cohérence, une étape (101) d'émission d'un signal représentatif de cette incohérence.

12. Dispositif (40, 41, 80, 85) de détection de fraude à l'identification d'une personne par reconnaissance de caractéristiques biométriques visibles, **caractérisé en ce qu'**il comporte :
- un capteur d'image (46),
- un moyen (42, 89) de commande d'une valeur de gain d'amplification du signal sortant du capteur d'image,
- un moyen d'acquisition de la valeur de gain appliquée pour chaque image captée,
- un moyen (43, 44, 89) de mesure des bruits d'acquisition d'au moins deux images d'au moins une partie du corps de cette personne, images captées en mettant en œuvre au moins deux gains d'amplification différents,
- un moyen (43, 44, 89) de vérification de cohérence entre les valeurs de gain acquises correspondant auxdites images et les valeurs de bruit mesurées, et
- un moyen (43, 44, 47, 89) d'émission d'une alerte de fraude à l'identification configuré pour, en cas de défaut de cohérence, émettre un signal représentatif de ce défaut de cohérence.
